# EUROPEAN PATENT APPLICATION

(11) **EP 4 596 304 A2**
(43) Date of publication of application: **06.08.2025**
(21) Application number: 24219081.7
(22) Date of filing: 11.12.2024
(51) Int. Cl.: B60L 53/16, B60L 53/62

(54) **MEANS AND METHODS FOR ENHANCED ROBOTIC WORK TOOL CHARGING**

(30) Priority: 30.01.2024 SE 2450093
(71) Applicant: Husqvarna AB, 561 82 Huskvarna (SE)
(72) Inventor: Stoffers, Marcus, Huskvarna (SE); Hjelmåker, Olle, Huskvarna (SE); Johansson, Linus, Huskvarna (SE)

(57) **Abstract**

The present disclosure relates to a robotic work tool interaction station (200) adapted to receive an oncoming outdoor robotic work tool (100). The interaction station (200) comprises a station control unit (212), a station charging unit (213) and a charging transmission arrangement (210) that is adapted to provide a charge current, delivered from the station charging unit (213), to a charging reception arrangement (156) of an outdoor robotic work tool (100). The charging transmission arrangement (210) comprises at least two separate first charge transmission connectors (210a, 210b, 210c) adapted for a first charge current polarity (+) and at least two separate second charge transmission connectors (210d, 210e, 210f) adapted for a second charge current polarity (-), each charge transmission connector (210a, 210b, 210c; 210d, 210e, 210f) being separately controllable.

## Description

### TECHNICAL FIELD

The present disclosure relates to a robotic work tool interaction station adapted to receive an oncoming outdoor robotic work tool. The interaction station comprises a station control unit, a station charging unit and a charging transmission arrangement that is adapted to provide a charge current, delivered from the station charging unit, to a charging reception arrangement of an outdoor robotic work tool. The present disclosure also relates to a robotic work tool and a robotic work tool system, as well as to associated methods.

### BACKGROUND

Robotic work tools such as for example robotic lawnmowers are becoming increasingly more popular. In a typical deployment a work area, such as a garden, the work area is enclosed by a boundary wire with the purpose of keeping the robotic lawnmower inside the work area. An electric control signal may be transmitted through the boundary wire thereby generating an (electro-) magnetic field emanating from the boundary wire. The robotic lawnmower is typically arranged with one or more sensors adapted to sense the control signal.

Alternatively, or as a supplement, the robotic lawnmower can be equipped with a navigation system that is adapted for satellite navigation as well as navigation by means of a local base station, the boundary is then virtual.

The robotic lawnmower is adapted to cut grass on a user's lawn automatically and can be charged automatically without intervention of the user, and does not need to be manually managed after being set once.

Due to regulations in different countries, exposed charging contacts may present a limited charge voltage in order to prevent injuries to humans and animals. This means that the limited charge voltage normally is applicable for charging connectors that are accessible, while a higher and more efficient charge voltage may be used for charging connectors that are not accessible.

Furthermore, due to insufficient installation of a robotic work tool system as well as age and wear, the charging process may be unnecessarily impaired.

### SUMMARY

The object of the present disclosure is to provide a robotic work tool interaction station, a robotic work tool and a robotic work tool system that are adapted for providing a desired charge voltage that may exceed such a maximum charge voltage, as well as being adapted for avoiding an impaired charging process.

This object is achieved by means of a robotic work tool interaction station adapted to receive an oncoming outdoor robotic work tool. The interaction station comprises a station control unit, a station charging unit and a charging transmission arrangement that is adapted to provide a charge current, delivered from the station charging unit, to a charging reception arrangement of an outdoor robotic work tool. The charging transmission arrangement comprises at least two separate first charge transmission connectors adapted for a first charge current polarity and at least two separate second charge transmission connectors adapted for a second charge current polarity. Each charge transmission connector is separately controllable.

This means that an increased charging reliability and an enhanced control of the charging process are conferred.

According to some aspects, the station charging unit is adapted to detect at which charge transmission connectors a charge current of correct polarity is delivered at a certain moment.

In this manner, the station charging unit can determine how efficient a present charging is, and how many charge transmission connectors that have made proper contact with the charge reception connectors. This is advantageous since it enables reporting malfunctions and poor docking between the interaction station and a robotic work tool. For example, if it is detected that a charge current is not transferred at all charge connectors for a predetermined number of dockings, preferably consecutive dockings, a warning message can be sent to a user, for example via a user's mobile phone, where the user is urged to check the installation of the charging station.

The interaction station is thus enabled to alert a user when the charging process has been determined to be impaired for a certain time, such that a systematic malfunction may be suspected. This may for example be due to insufficient installation of a robotic work tool system as well as age and wear.

According to some aspects, the station control unit is adapted to control the station charging unit to set a certain charge voltage in dependency of how many charge transmission connectors that deliver a charge current of correct polarity at a certain moment.

In this manner, possible heat build-up due to high charge current running between the charge transmission connectors and the corresponding charge reception connectors can be avoided. The fewer charge transmission connectors that are determined to deliver a charge current of correct polarity to the corresponding charge reception connectors at a certain moment, the lower charge voltage can be applied.

Furthermore, exposed and/or accessible charging contacts may present a limited charge voltage due to regulations in order to prevent injuries to humans and animals. This means that if it is determined that all the charge transmission connectors deliver a charge current of correct polarity to the corresponding charge reception connectors at a certain moment, a maximum charge voltage, exceeding the limited charge voltage, and constituting a more efficient charge voltage, can be applied since there are no exposed charging contacts in that case.

If, however, it is determined that not all the charge transmission connectors deliver a charge current of correct polarity to the corresponding charge reception connectors at a certain moment, some charging contacts may be exposed and accessible to humans and animals, and then a limited charge voltage is applied.

This also means that when no robotic lawnmower is docked for charging at the interaction station, no charge voltage at all need to be applied at the charge transmission connectors.

This object is also achieved by means of robotic work tools, robotic work tool systems and methods that are associated with the above advantages.

### BRIEF DESCRIPTION OF THE DRAWINGS

The present disclosure will now be described more in detail with reference to the appended drawings, where:
- Figure 1: shows a perspective side view of a robotic lawnmower;
- Figure 2: shows a schematic overview of the robotic lawnmower;
- Figure 3: shows a side view of a robotic work tool system;
- Figure 4-8: show schematic views of charging arrangements according to a first example;
- Figure 9: shows a schematic view of connected charging arrangements;
- Figure 10-11: show schematic views of charging arrangements according to a second example;
- Figure 12: shows a computer program product; and
- Figure 13-15: show flowcharts for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

Generally, the present disclosure relates to a robotic work tool 100 that can be adapted for indoor use such as robotic vacuum cleaner or adapted for outdoor use such as collecting leaves or golf balls, or as a robotic lawnmower. Generally, the present disclosure relates to a robotic work tool interaction station 200.

In the following, the present disclosure will be described for a robotic lawnmower and a robotic lawnmower interaction station 200 such as a robotic lawnmower charging station.

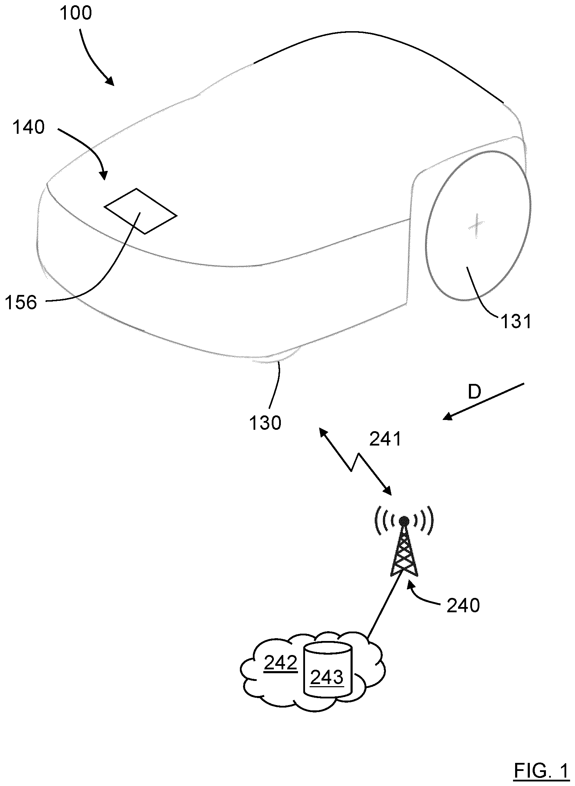

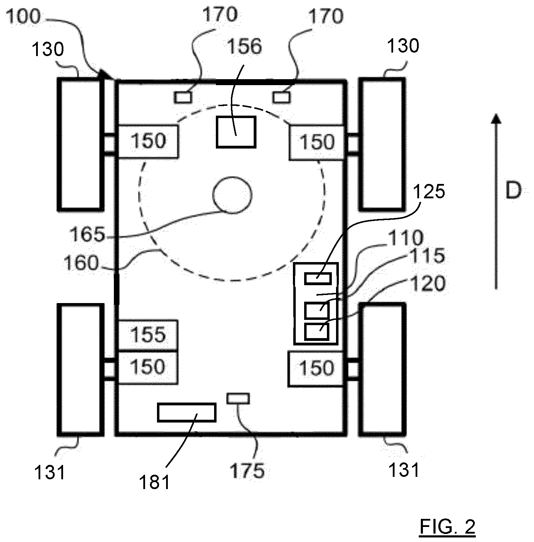

Figure 1 shows a perspective view of a robotic lawnmower 100 and Figure 2 shows a schematic overview of the robotic lawnmower 100. The robotic lawnmower 100 is adapted for a forward travelling direction D, has a main body part 140 and a plurality of wheels 130, 131; in this example the robotic lawnmower 100 has four wheels, two front wheels 130 and two rear wheels 131. The robotic lawnmower 100 comprises a mower control unit 110, generally constituted by a tool control unit 110, and at least one electric motor 150, where at least one wheel 130, 131 is drivably connected to at least one electric motor 150. It should be noted that even if the description herein is focused on electric motors, combustion engines may alternatively be used in combination with an electric motor arrangement. The robotic lawnmower 100 may be a multi-chassis type or a mono-chassis type. A multi-chassis type comprises more than one body parts that are movable with respect to one another. A mono-chassis type comprises only one main body part.

According to some aspects, the robotic lawnmower 100 also comprises a grass cutting device in the form of a rotatable disc 160 that is driven by a cutter motor 165 in a previously well-known manner.

According to some aspects, the robotic lawnmower 100 comprises at least one of a navigation sensor arrangement 175 and an environmental detection sensor arrangement 170. According to some aspects, the navigation sensor arrangement 175 may for example may be adapted for satellite navigation by means of GPS (Global Positioning System) or some other Global Navigation Satellite System (GNSS) system, for example using Real Time Kinematic (RTK). In addition to this, the navigation system is adapted for navigation by means of a local base station that can be housed in the charging station and provide a navigation signal that further increases the navigation accuracy.

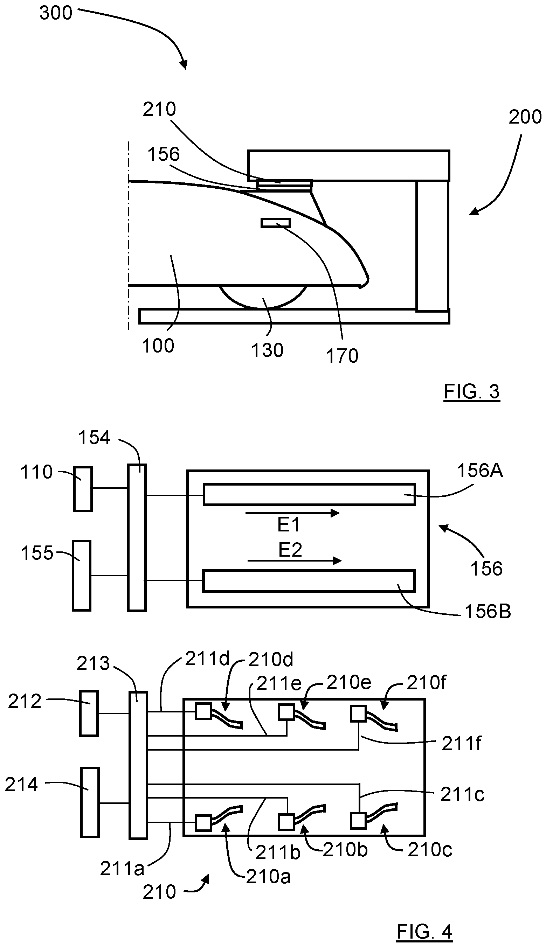

With reference also to Figure 3, Figure 4 and Figure 5, the robotic lawnmower 100 further comprises a rechargeable electric power source 155, such as a battery 155, adapted to provide power to the electric motor arrangement 150, 165 and a charging reception arrangement 156, for example in the form of charging skids. The charging reception arrangement 156 is adapted to be electrically connected to a charging transmission arrangement 210 for charging the power source 155 via a mower charging unit 154, which generally is constituted by a tool charging unit 154.

Furthermore, there is a robotic lawnmower interaction station 200, for example a charging station 200, adapted to receive an oncoming outdoor robotic lawnmower 100, such as the robotic lawn mower described above, as shown in Figure 3.

The interaction station 200 comprises a station control unit 212, a station charging unit 213 and a charging transmission arrangement 210 that is adapted to provide a charge current, delivered from the station charging unit 213, to the charging reception arrangement 156 of the robotic lawnmower 100.

According to the present disclosure, the charging transmission arrangement 210 comprises at least two separate first charge transmission connectors 210a, 210b, 210c adapted for a first charge current polarity, for example a positive polarity +, and at least two separate second charge transmission connectors 210d, 210e, 210f adapted for a second charge current polarity, for example a negative polarity -, each charge transmission connector 210a, 210b, 210c; 210d, 210e, 210f being separately controllable. In this example, the charging transmission arrangement 210 comprises three separate first charge transmission connectors 210a, 210b, 210c and three separate second charge transmission connectors 210d, 210e, 210f. Furthermore, the robotic lawnmower's charging reception arrangement 156 comprises a first charge reception connector 156A, adapted for the first charge current polarity +, and a second charge reception connector 156B, adapted for the second charge current polarity -.

In this example, the charge transmission connector 210a, 210b, 210c; 210d, 210e, 210f are formed by resilient metal members and the charge reception connector 156A, 156B are formed by fixed metal members that have a corresponding longitudinal extension E1, E2. The resilient metal members 210a, 210b, 210c; 210d, 210e, 210f are adapted to exert a pressure against the fixed metal members 156A, 156B when in place for charging. This only a schematic example, the charge connectors can of course be formed in many other ways.

This means that an increased charging reliability and an enhanced control of the charging process are conferred.

According to some aspects, the station charging unit 213 is adapted to detect at which charge transmission connectors 210a, 210b, 210c; 210d, 210e, 210f a charge current of correct polarity is delivered at a certain moment.

In this manner, the station charging unit 213 can determine how efficient a present charging is, and how many charge transmission connectors 210a, 210b, 210c; 210d, 210e, 210f that have made proper contact with the charge reception connectors 156A, 156B. This is advantageous for reporting malfunctions and poor docking between the interaction station 200 and a robotic lawnmower 100. For example, if it is detected that a charge current is not transferred at all charge connectors 156a, 156b, 156c; 156d, 156e, 156f; 210a, 210b, 210c; 210d, 210e, 210f for a predetermined number of dockings, preferably consecutive dockings, a warning message can be sent to a user, for example via a user's mobile phone, where the user is urged to check the installation of the charging station. As an example, at a new installation of an interaction station 200 and a robotic lawnmower 100, it can be monitored how many, and which, charge connectors 156a, 156b, 156c; 156d, 156e, 156f; 210a, 210b, 210c; 210d, 210e, 210f that transfer a charge current for a predetermined number of dockings and following charge procedures. A user can then be given information that urges him to adjust a poor installation.

Furthermore, over time, the charge connectors 156a, 156b, 156c; 156d, 156e, 156f; 210a, 210b, 210c; 210d, 210e, 210f; 156A, 156B; 210A, 210B may get worn and oxidize. Ground conditions may also change over time such that the interaction station 200 may become displaced in such a way that some charge connectors 156a, 156b, 156c; 156d, 156e, 156f; 210a, 210b, 210c; 210d, 210e, 210f; 156A, 156B; 210A, 210 may not be able to make proper contact. This can also be handled by sending an alert or warning message to a user, urging him to check, adjust and/or repair.

A user can thus be alerted when the charging process has been determined to be impaired for a certain time, such that a systematic malfunction may be suspected. This may for example be due to insufficient installation of a robotic work tool system as well as age and wear.

According to some aspects, the station control unit 212 is adapted to control the station charging unit 213 to set a certain charge voltage in dependency of how many charge transmission connectors 210a, 210b, 210c; 210d, 210e, 210f that deliver a charge current of correct polarity at a certain moment.

This means that the station control unit 212 can adapt the charge voltage to the present charging situation, i.e., how many charge transmission connectors 210a, 210b, 210c; 210d, 210e, 210f that deliver a charge current of correct polarity to the corresponding charge reception connectors 156A, 156B at a certain moment.

In this manner, the charging current is affected, and possible heat build-up due to high charge current running between the charge transmission connectors 210a, 210b, 210c; 210d, 210e, 210f and the corresponding charge reception connectors 156A, 156B is avoided. It is determined that all the charge transmission connectors 210a, 210b, 210c; 210d, 210e, 210f deliver a charge current of correct polarity to the corresponding charge reception connectors 156A, 156B at a certain moment, a higher charge voltage can be used than if not all charge transmission connectors 210a, 210b, 210c; 210d, 210e, 210f are determined to deliver a charge current of correct polarity to the corresponding charge reception connectors 156A, 156B at a certain moment. The fewer charge transmission connectors 210a, 210b, 210c; 210d, 210e, 210f that are determined to deliver a charge current of correct polarity to the corresponding charge reception connectors 156A, 156B at a certain moment, the lower charge voltage can be applied.

Furthermore, exposed and/or accessible charging contacts may present a limited charge voltage due to regulations in order to prevent injuries to humans and animals. This means that if it is determined that all the charge transmission connectors 210a, 210b, 210c; 210d, 210e, 210f deliver a charge current of correct polarity to the corresponding charge reception connectors 156A, 156B at a certain moment, a maximum charge voltage, exceeding the limited charge voltage, and constituting a more efficient charge voltage, can be applied since there are no exposed charging contacts in that case.

If, however, it is determined that not all the charge transmission connectors 210a, 210b, 210c; 210d, 210e, 210f deliver a charge current of correct polarity to the corresponding charge reception connectors 156A, 156B at a certain moment, some charging contacts may be exposed and accessible to humans and animals, and then a limited charge voltage is applied.

This also means that when no robotic lawnmower is docked for charging at the interaction station 200, no charge voltage at all need to be applied at the charge transmission connectors 210a, 210b, 210c; 210d, 210e, 210f.

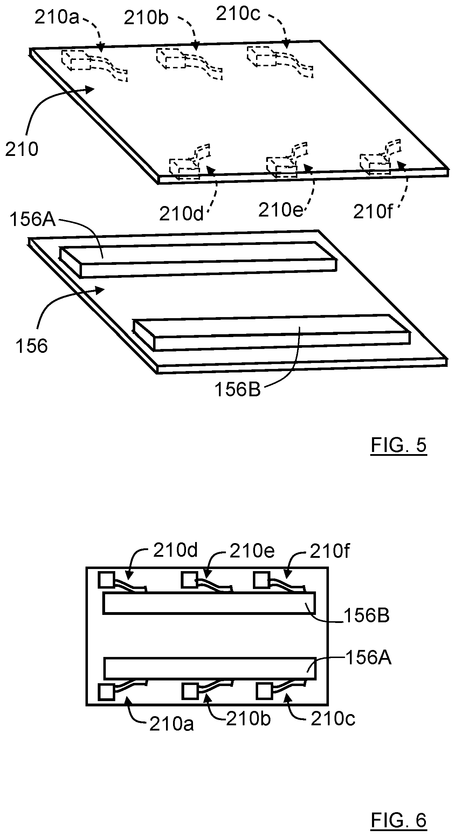

Examples are shown in Figure 6, Figure 7 and Figure 8. In Figure 6, all the charge transmission connectors 210a, 210b, 210c; 210d, 210e, 210f are in electrical contact with the corresponding charge reception connectors 156A, 156B and thus deliver an appropriate charge current to the corresponding charge reception connectors 156A, 156B.

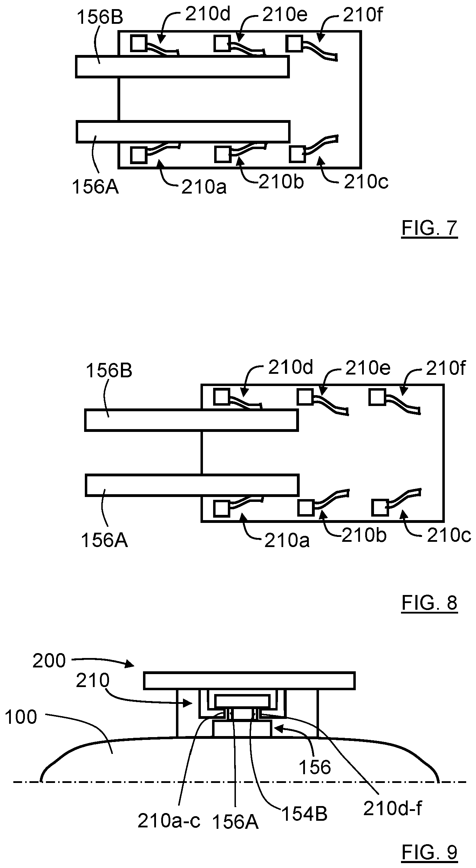

In Figure 7, only four transmission connectors 210a, 210b; 210d, 210e are in electrical contact with the corresponding charge reception connectors 156A, 156B, and in Figure 8 only two transmission connectors 210a; 210d are in electrical contact with the corresponding charge reception connectors 156A, 156B. It is conceivable that the charge voltage in lowered in steps for the different situations in Figure 7 and Figure 8.

Figure 9 illustrates an example of how the charging reception arrangement 156 and the charging transmission arrangement 210 may be configured. The charging reception arrangement 156 comprises opposing groves where the charge reception connectors 156A, 156B are attached, where the charging transmission arrangement 210 comprises angled elements that protrude into the grooves such that the charge transmission connectors 210a, 210b, 210c; 210d, 210e, 210f may contact the charge reception connectors 156A, 156B.

In the above examples, the charging transmission arrangement 210 comprises at least two separate first charge transmission connectors 210a, 210b, 210c adapted for a first charge current polarity +, and at least two separate second charge transmission connectors 210d, 210e, 210f adapted for a second charge current polarity -. It is of course conceivable that the charge reception connectors 156A, 156B may be divided into separate connectors in a similar way.

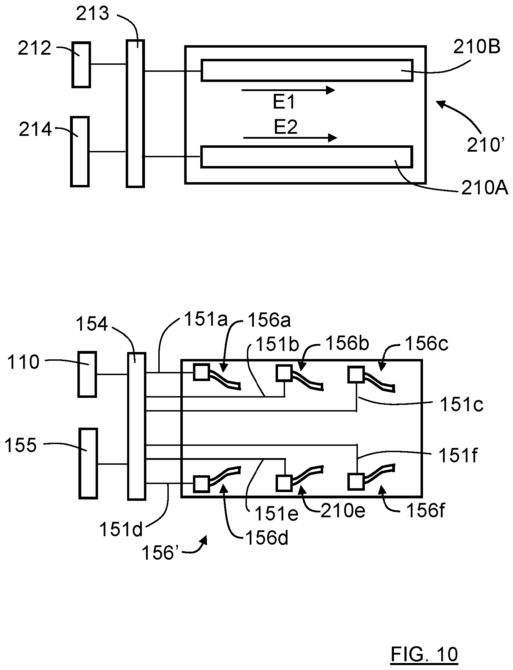

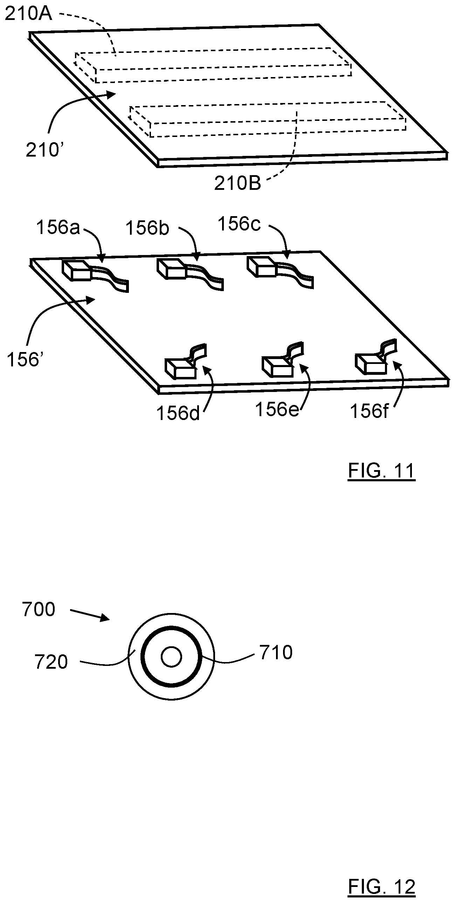

Therefore, according to further aspects of the present disclosure with reference to Figure 10 and Figure 11, the charging reception arrangement 156' is adapted to be electrically connected to a charging transmission arrangement 210' for charging the power source 155 via the mower charging unit 154, which generally is constituted by a tool charging unit 154. The charging reception arrangement 156' comprises at least two separate first charge reception connectors 156a, 156b, 156c adapted for a first charge current polarity, for example a positive polarity +, and at least two separate second charge reception connectors 156d, 156e, 156f adapted for a second charge current polarity, for example a negative polarity -, each charge reception connector 156a, 156b, 156c; 156d, 156e, 156f being separately controllable.

Furthermore, the interaction station's charging transmission arrangement 210' comprises a first charge transmission connector 210A, adapted for the first charge current polarity +, and a second charge transmission connector 210B, adapted for the second charge current polarity -.

This means that an increased charging reliability and an enhanced control of the charging process are conferred. Here, the separation of the charge connectors is implemented at the lawn mower's charging reception arrangement 156' instead of at the interaction station's charging transmission arrangement 210'.

Corresponding to the previous example, in this example the charge reception connector 156a, 156b, 156c; 156d, 156e, 156f are formed by resilient metal members and the charge transmission connectors 210A, 210B are formed by fixed metal members that have a corresponding longitudinal extension E1, E2. The resilient metal members 156a, 156b, 156c; 156d, 156e, 156f are adapted to exert a pressure against the fixed metal members 210A, 210B when in place for charging. This only a schematic example, the charge connectors can of course be formed in many other ways.

According to some aspects, the mower charging unit 154 is adapted to detect at which charge reception connectors 156a, 156b, 156c; 156d, 156e, 156f a charge current of correct polarity is received at a certain moment.

In this manner, the mower charging unit 154 can determine how efficient a present charging is, and how many reception connectors 156a, 156b, 156c; 156d, 156e, 156f that have made proper contact with the charge transmission connectors 210A, 210B.

According to some aspects, the mower control unit 110 is adapted to communicate how many charge reception connectors 156a, 156b, 156c; 156d, 156e, 156f that receive a charge current of correct polarity at a certain moment to a robotic work tool interaction station 200.

This enables the station control unit 212 to adapt the charge voltage to the present charging situation, i.e., how many charge transmission connectors 210a, 210b, 210c; 210d, 210e, 210f that deliver a charge current of correct polarity to the corresponding charge reception connectors 156A, 156B at a certain moment. This brings the technical benefits and advantages discussed above for the previous example where the charging transmission arrangement 210 comprises at least two separate charge transmission connectors for each polarity.

Other configurations are of course possible, where both the charging transmission arrangement 210 and the charging reception arrangement 156 comprises at least two separate charge connectors for each polarity, which provides a higher degree of control, but may suffer from a lower degree of reliability since all separate charge connectors have to match each other for connection.

The present disclosure also relates to a robotic work tool system 300 comprising a robotic work tool 100 and a robotic work tool interaction station 200 adapted to receive an oncoming outdoor robotic work tool 100. The robotic work tool 100 comprises a plurality of wheels 130, 131, a tool control unit 110 and at least one electric motor arrangement 150, 165, where at least one wheel 131 is drivably connected to at least one electric motor 150. The robotic work tool 100 further compries a rechargeable electric power source 155 adapted to provide power to the electric motor arrangement 150, 165 and a charging reception arrangement 156 adapted to be electrically connected to a charging transmission arrangement 210 for charging the power source 155 via a tool charging unit 154.

The interaction station 200 comprises a station control unit 212, a station charging unit 213 and a charging transmission arrangement 210 that is adapted to provide a charge current, delivered from the station charging unit 213, to the charging reception arrangement 156.

At least one of the charging reception arrangement 156 and the charging transmission arrangement 210 comprises at least two separate charge connectors 156a, 156b, 156c; 210a, 210b, 210c for a first charge current polarity, for example a positive polarity +, and at least two separate charge connectors 156d, 156e, 156f; 210d, 210e, 210f for a second charge current polarity, for example a positive polarity +.

This means that a system is provided, comprising a robotic work tool such as the robotic lawnmower as described herein, and a robotic work tool interaction station such as the interactions station/charge station as described herein, being associated with technical benefits and advantages discussed above.

According to some aspects, the station charging unit 213 is adapted to receive information regarding at which charge connectors 156a, 156b, 156c; 156d, 156e, 156f; 210a, 210b, 210c; 210d, 210e, 210f a charge current of correct polarity is transferred at a certain moment.

This means that station charging unit 213 is informed of at which charge connectors 156a, 156b, 156c; 156d, 156e, 156f; 210a, 210b, 210c; 210d, 210e, 210f a charge current of correct polarity is transferred, irrespective of if it is the charge transmission connectors 210a, 210b, 210c; 210d, 210e, 210f, charge reception connectors 156a, 156b, 156c; 156d, 156e, 156f or both that comprises at least two separate charge transmission connectors for each polarity.

According to some aspects, the charging transmission arrangement 210 comprises at least two separate charge transmission connectors 210a, 210b, 210c; 210d, 210e, 210f and is adapted to detect at which charge transmission connectors 210a, 210b, 210c; 210d, 210e, 210f a charge current of correct polarity is delivered at a certain moment.

According to some aspects, the charging reception arrangement 156 comprises at least two separate charge reception connectors 156a, 156b, 156c; 156d, 156e, 156f and is adapted to detect at which charge reception connectors 156a, 156b, 156c; 156d, 156e, 156f a charge current of correct polarity is received at a certain moment.

This means that the charge transmission connectors 210a, 210b, 210c; 210d, 210e, 210f, the charge reception connectors 156a, 156b, 156c; 156d, 156e, 156f or both comprises at least two separate charge transmission connectors for each polarity, and can be checked for present charge current.

According to some aspects, the tool control unit 110 is adapted to communicate how many charge reception connectors 156a, 156b, 156c; 156d, 156e, 156f that receive a charge current of correct polarity at a certain moment to the station control unit 212. This enables the station control unit 212 to adapt the charge voltage to the present charging situation, i.e., how many charge transmission connectors 210a, 210b, 210c; 210d, 210e, 210f that deliver a charge current of correct polarity to the corresponding charge reception connectors 156A, 156B at a certain moment.

According to some aspects, the station control unit 212 is adapted to control the station charging unit 213 to set a certain charge voltage in dependency of how many charge transmission connectors 210a, 210b, 210c; 210d, 210e, 210f and/or charge reception connectors 156a, 156b, 156c; 156d, 156e, 156f that deliver a charge current of correct polarity at a certain moment. This means that the station control unit 212 can adapt the charge voltage to the present charging situation, i.e., how many charge transmission connectors 210a, 210b, 210c; 210d, 210e, 210f that deliver a charge current of correct polarity to the corresponding charge reception connectors 156A, 156B at a certain moment.

According to some aspects, at least one of the tool control unit 110 and the station control unit 212 is adapted to communicate an alert message intended for a user when charge connectors 156a, 156b, 156c; 156d, 156e, 156f; 210a, 210b, 210c; 210d, 210e, 210f fail to deliver a charge current of correct polarity to a predetermined extent for a predetermined number of times.

This means that a user can be alerted when the charging process has been determined to be impaired for a certain time, such that a systematic malfunction may be suspected. This may for example be due to insufficient installation of a robotic work tool system as well as age and wear.

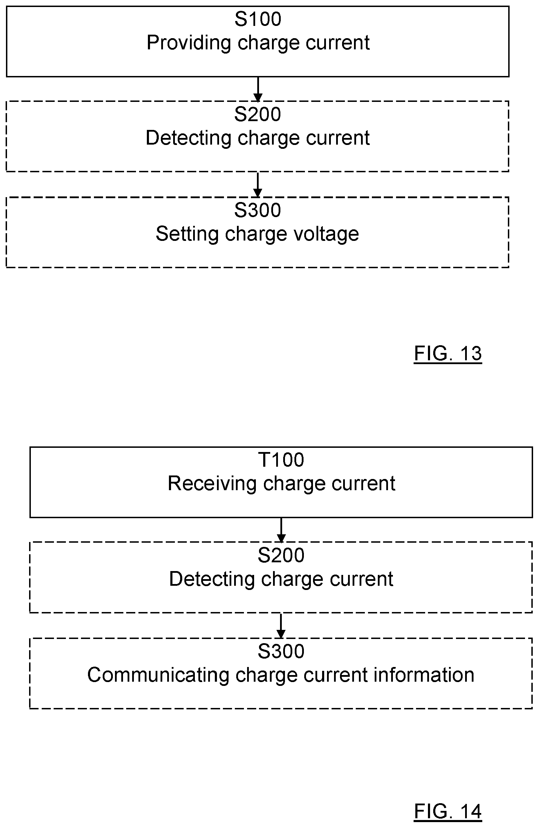

With reference to Figure 13, the present disclosure also relates to a method at a robotic work tool interaction station 200 used for receiving an oncoming outdoor robotic work tool 100. The method comprises providing S100 a charge current, delivered from the station charging unit 213, to a charging reception arrangement 156 of an outdoor robotic work tool 100 using at least two separate first charge transmission connectors 210a, 210b, 210c adapted for a first charge current polarity + and at least two separate second charge transmission connectors 210d, 210e, 210f adapted for a second charge current polarity -, each charge transmission connector 210a, 210b, 210c; 210d, 210e, 210f being separately controllable.

According to some aspects, the method further comprises detecting S200 at which charge transmission connectors 210a, 210b, 210c; 210d, 210e, 210f a charge current of correct polarity is delivered at a certain moment, and setting S300 a certain charge voltage in dependency of how many charge transmission connector 210a, 210b, 210c; 210d, 210e, 210f that deliver a charge current of correct polarity at a certain moment.

With reference to Figure 14, the present disclosure also relates to a method at a robotic work tool 100 comprising a rechargeable electric power source 155 used for providing power to an electric motor arrangement 150, 165. The method comprises receiving T100 a charge current from a charging transmission arrangement 210 in a work tool interaction station 200, used for receiving an oncoming outdoor robotic work tool 100, using at least two separate first charge reception connectors 156a, 156b, 156c adapted for a first charge current polarity + and at least two separate second charge reception connectors 156d, 156e, 156f adapted for a second charge current polarity -, each charge reception connector 156a, 156b, 156c; 156d, 156e, 156f being separately controllable.

According to some aspects, the method further comprises detecting T200 at which charge reception connectors 156a, 156b, 156c; 156d, 156e, 156f a charge current of correct polarity is received at a certain moment, and communicating T300 how many charge reception connectors 156a, 156b, 156c; 156d, 156e, 156f that receive a charge current of correct polarity at a certain moment to a robotic work tool interaction station 200.

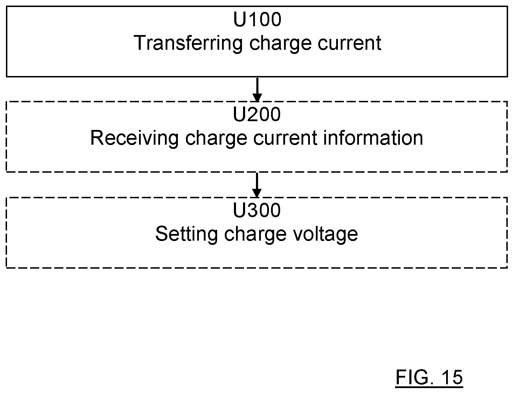

With reference to Figure 15, the present disclosure also relates to a method at a robotic work tool system 300 comprising a robotic work tool 100 and a robotic work tool interaction station 200 used for receiving an oncoming outdoor robotic work tool 100, where the robotic work tool 100 comprises a rechargeable electric power source 155 used for providing power to an electric motor arrangement 150, 165. The method comprising transferring U100 a charge current from a charging transmission arrangement 210 in the work tool interaction station 200 to a charging reception arrangement 156 in the robotic work tool 100 using at least two separate charge connectors 156a, 156b, 156c; 210a, 210b, 210c for a first charge current polarity + and at least two separate charge connectors 156d, 156e, 156f; 210d, 210e, 210f for a second charge current polarity -.

According to some aspects, the method further comprises receiving U200 information regarding at which charge connectors 156a, 156b, 156c; 156d, 156e, 156f; 210a, 210b, 210c; 210d, 210e, 210f a charge current of correct polarity is transferred at a certain moment, and setting U300 a certain charge voltage in dependency of at how many charge connectors 156a, 156b, 156c; 156d, 156e, 156f; 210a, 210b, 210c, 210d, 210e, 210f a charge current of correct polarity is transferred at a certain moment.

According to some aspects, the charging transmission arrangement 210 uses at least two separate charge transmission connectors 210a, 210b, 210c; 210d, 210e, 210f, where the method comprises detecting at which charge transmission connectors 210a, 210b, 210c; 210d, 210e, 210f a charge current of correct polarity is delivered at a certain moment.

According to some aspects, the charging reception arrangement 156 uses at least two separate charge reception connectors 156a, 156b, 156c; 156d, 156e, 156f, where the method comprises detecting at which charge reception connectors 156a, 156b, 156c; 156d, 156e, 156f a charge current of correct polarity is received at a certain moment.

According to some aspects, the method further comprises communicating how many charge reception connectors 156a, 156b, 156c; 156d, 156e, 156f that receive a charge current of correct polarity at a certain moment to the robotic work tool interaction station 200.

According to some aspects, the method further comprises communicating an alert message intended for a user when charge connectors (156a, 156b, 156c; 156d, 156e, 156f; 210a, 210b, 210c; 210d, 210e, 210f) fail to deliver a charge current of correct polarity to a predetermined extent for a predetermined number of times.

For all examples described, the robotic work tool 100 may be any type of robotic work tool as discussed above, according to some aspects the robotic work tool is a robotic lawnmower 100. In the same manner, the robotic work tool interaction station 200 may be any type of work tool interaction station as discussed above, according to some aspects the work tool interaction station is lawnmower interaction station or lawnmower charging station.

In Figure 2 it is schematically illustrated, in terms of a number of functional units, the components of any one of the control units 110, 212 according to embodiments of the discussions herein, exemplified for the mower control unit 110 in Figure 2. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry 115 thus comprises a plurality of digital logic components.

Particularly, the processing circuitry 115 is configured to cause the control unit 110, 212 to perform a set of operations, or steps to control the operation of the robotic lawnmower 1 including, but not being limited to, controlling the radar transceivers 170, processing measurements results received via the radar transceivers 170, and the propulsion of the robotic lawnmower 100. For example, the storage medium 120 may store the set of operations, and the processing circuitry 115 may be configured to retrieve the set of operations from the storage medium 120 to cause the control unit 110, 212 to perform the set of operations. The set of operations may be provided as a set of executable instructions. Thus, the processing circuitry 115 is thereby arranged to execute methods as herein disclosed.

The storage medium 120 may also comprise persistent storage, which, for example, can be any single one or combination of magnetic memory, optical memory, solid state memory or even remotely mounted memory.

According to some aspects, the control unit 110, 212 further comprises an interface 113 for communications with at least one external device such as a control panel or an external device. As such the interface 113 may comprise one or more transmitters and receivers, comprising analogue and digital components and a suitable number of ports for wireline communication. The interface 113 can be adapted for communication with other devices, such as a remote server 243, a personal computer or smartphone, a charging station, and/or other robotic working tools. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as disclosed herein.

Figure 12 shows a computer program product 700 comprising computer executable instructions 710, such as computer program code 710, stored on media 720 to execute any of the methods disclosed herein.

The present disclosure is not limited to the examples provided above, but may vary within the scope of the appended claims. For example, the charging units 154, 213 may comprise all necessary circuitry to handle the charging procedure, and may include charging control units.

According to some aspects, any one of the control units 110, 212, or both, can be arranged to communicate 241 with a cellular communication system 240, for example via the interface 113. This communication system may, e.g., be a third generation partnership program (3GPP) defined access network like the fourth generation (4G) or the fifth generation (5G) access networks. The access network may provide access to remote networks and other resources such as, e.g., the Internet 242.

It is also appreciated that some processing functions may be performed by resources in a remote network 242, such as the remote server 243. Thus, functions of any one of the control units 110, 212, or both, may be performed remotely on, e.g., the remote server 243. The remote server 243 may then form or be a part of the control unit 110, 243.

Examples of the present disclosure include:
1. A robotic work tool interaction station (200) adapted to receive an oncoming outdoor robotic work tool (100), where the interaction station (200) comprises a station control unit (212), a station charging unit (213) and a charging transmission arrangement (210) that is adapted to provide a charge current, delivered from the station charging unit (213), to a charging reception arrangement (156) of an outdoor robotic work tool (100), wherein the charging transmission arrangement (210) comprises at least two separate first charge transmission connectors (210a, 210b, 210c) adapted for a first charge current polarity (+) and at least two separate second charge transmission connectors (210d, 210e, 210f) adapted for a second charge current polarity (-), each charge transmission connector (210a, 210b, 210c; 210d, 210e, 210f) being separately controllable.
2. The robotic work tool interaction station (200) according to example 1, wherein the station charging unit (213) is adapted to detect at which charge transmission connectors (210a, 210b, 210c; 210d, 210e, 210f) a charge current of correct polarity is delivered at a certain moment.
3. The robotic work tool interaction station (200) according to example 2, wherein the station control unit (212) is adapted to control the station charging unit (213) to set a certain charge voltage in dependency of how many charge transmission connectors (210a, 210b, 210c; 210d, 210e, 210f) that deliver a charge current of correct polarity at a certain moment.
4. A robotic work tool (100) comprising a main body part (140), a plurality of wheels (130, 131), a tool control unit (110) and at least one electric motor arrangement (150, 165), where at least one wheel (131) is drivably connected to at least one electric motor (150), the robotic work tool (100) further comprising a rechargeable electric power source (155) adapted to provide power to the electric motor arrangement (150, 165) and a charging reception arrangement (156) adapted to be electrically connected to a charging transmission arrangement (210) for charging the power source (155) via a tool charging unit (154), wherein the charging reception arrangement (156) comprises at least two separate first charge reception connectors (156a, 156b, 156c) adapted for a first charge current polarity (+) and at least two separate second charge reception connectors (156d, 156e, 156f) adapted for a second charge current polarity (-), each charge reception connector (156a, 156b, 156c; 156d, 156e, 156f) being separately controllable.
5. The robotic work tool (100) according to example 4, wherein the tool charging unit (154) is adapted to detect at which charge reception connectors (156a, 156b, 156c; 156d, 156e, 156f) a charge current of correct polarity is received at a certain moment.
6. The robotic work tool (100) according to example 5, wherein the tool control unit (110) is adapted to communicate how many charge reception connectors (156a, 156b, 156c; 156d, 156e, 156f) that receive a charge current of correct polarity at a certain moment to a robotic work tool interaction station (200).
7. The robotic work tool (100) according to any one of the examples 4-6, wherein the robotic work tool (100) is a robotic lawnmower (100).
8. The robotic work tool (100) according to example 7, wherein the robotic lawnmower (100) comprises a grass cutting device in the form of a rotatable disc (160) that is driven by a cutter motor (165).
9. A robotic work tool system (300) comprising a robotic work tool (100) and a robotic work tool interaction station (200) adapted to receive an oncoming outdoor robotic work tool (100),
   - where the robotic work tool (100) comprises a plurality of wheels (130, 131), a tool control unit (110) and at least one electric motor arrangement (150, 165), where at least one wheel (131) is drivably connected to at least one electric motor (150), the robotic work tool (100) further comprising a rechargeable electric power source (155) adapted to provide power to the electric motor arrangement (150, 165) and a charging reception arrangement (156) adapted to be electrically connected to a charging transmission arrangement (210) for charging the power source (155) via a tool charging unit (154),
   - where the interaction station (200) comprises a station control unit (212), a station charging unit (213) and a charging transmission arrangement (210) that is adapted to provide a charge current, delivered from the station charging unit (213), to the charging reception arrangement (156),
   - where at least one of the charging reception arrangement (156) and the charging transmission arrangement (210) comprises at least two separate charge connectors (156a, 156b, 156c; 210a, 210b, 210c) for a first charge current polarity (+) and at least two separate charge connectors (156d, 156e, 156f; 210d, 210e, 210f) for a second charge current polarity (-).
10. The robotic work tool system (300) according to example 9, wherein the station charging unit (213) is adapted to receive information regarding at which charge connectors (156a, 156b, 156c; 156d, 156e, 156f; 210a, 210b, 210c; 210d, 210e, 210f) a charge current of correct polarity is transferred at a certain moment.
11. The robotic work tool system (300) according to any one of the examples 9 or 10, wherein the charging transmission arrangement (210) comprises at least two separate charge transmission connectors (210a, 210b, 210c; 210d, 210e, 210f) and is adapted to detect at which charge transmission connectors (210a, 210b, 210c; 210d, 210e, 210f) a charge current of correct polarity is delivered at a certain moment.
12. The robotic work tool system (300) according to any one of the examples 9 or 10, wherein the tool charging unit (154) comprises at least two separate charge reception connectors (156a, 156b, 156c; 156d, 156e, 156f) and is adapted to detect at which charge reception connectors (156a, 156b, 156c; 156d, 156e, 156f) a charge current of correct polarity is received at a certain moment.
13. The robotic work tool system (300) according to example 12, wherein the tool control unit (110) is adapted to communicate how many charge reception connectors (156a, 156b, 156c; 156d, 156e, 156f) that receive a charge current of correct polarity at a certain moment to the station control unit (212).
14. The robotic work tool system (300) according to any one of the examples 10, 11 or 13, wherein the station control unit (212) is adapted to control the station charging unit (213) to set a certain charge voltage in dependency of how many charge transmission connectors (210a, 210b, 210c; 210d, 210e, 210f) and/or charge reception connectors (156a, 156b, 156c; 156d, 156e, 156f) that deliver a charge current of correct polarity at a certain moment.
15. The robotic work tool system (300) according to any one of the examples 10-14, wherein at least one of the tool control unit (110) and the station control unit (212) is adapted to communicate an alert message intended for a user when charge connectors (156a, 156b, 156c; 156d, 156e, 156f; 210a, 210b, 210c; 210d, 210e, 210f) fail to deliver a charge current of correct polarity to a predetermined extent for a predetermined number of times.
16. A method at a robotic work tool interaction station (200) used for receiving an oncoming outdoor robotic work tool (100), the method comprising
   providing (S100) a charge current, delivered from the station charging unit (213), to a charging reception arrangement (156) of an outdoor robotic work tool (100) using at least two separate first charge transmission connectors (210a, 210b, 210c) adapted for a first charge current polarity (+) and at least two separate second charge transmission connectors (210d, 210e, 210f) adapted for a second charge current polarity (-), each charge transmission connector (210a, 210b, 210c; 210d, 210e, 210f) being separately controllable.
17. The method according to example 16, further comprising
   detecting (S200) at which charge transmission connectors (210a, 210b, 210c; 210d, 210e, 210f) a charge current of correct polarity is delivered at a certain moment; and
   setting (S300) a certain charge voltage in dependency of how many charge transmission connector (210a, 210b, 210c; 210d, 210e, 210f) that deliver a charge current of correct polarity at a certain moment.
18. A method at a robotic work tool (100) comprising a rechargeable electric power source (155) used for providing power to an electric motor arrangement (150, 165), the method comprising
   receiving (T100) a charge current from a charging transmission arrangement (210) in a work tool interaction station (200), used for receiving an oncoming outdoor robotic work tool (100), using at least two separate first charge reception connectors (156a, 156b, 156c) adapted for a first charge current polarity (+) and at least two separate second charge reception connectors (156d, 156e, 156f) adapted for a second charge current polarity (-), each charge reception connector (156a, 156b, 156c; 156d, 156e, 156f) being separately controllable.
19. The method according to example 18, further comprising
   detecting (T200) at which charge reception connectors (156a, 156b, 156c; 156d, 156e, 156f) a charge current of correct polarity is received at a certain moment; and
   communicating (T300) how many charge reception connectors (156a, 156b, 156c; 156d, 156e, 156f) that receive a charge current of correct polarity at a certain moment to a robotic work tool interaction station (200).
20. A method at a robotic work tool system (300) comprising a robotic work tool (100) and a robotic work tool interaction station (200) used for receiving an oncoming outdoor robotic work tool (100), where the robotic work tool (100) comprises a rechargeable electric power source (155) used for providing power to an electric motor arrangement (150, 165), the method comprising
   transferring (U100) a charge current from a charging transmission arrangement (210) in the work tool interaction station (200) to a charging reception arrangement (156) in the robotic work tool (100) using at least two separate charge connectors (156a, 156b, 156c; 210a, 210b, 210c) for a first charge current polarity (+) and at least two separate charge connectors (156d, 156e, 156f; 210d, 210e, 210f) for a second charge current polarity (-).
21. The method according to example 20, wherein the method comprises
   receiving (U200) information regarding at which charge connectors (156a, 156b, 156c; 156d, 156e, 156f; 210a, 210b, 210c; 210d, 210e, 210f) a charge current of correct polarity is transferred at a certain moment; and
   setting (U300) a certain charge voltage in dependency of at how many charge connectors (156a, 156b, 156c; 156d, 156e, 156f; 210a, 210b, 210c, 210d, 210e, 210f) a charge current of correct polarity is transferred at a certain moment.
22. The method according to any one of the examples 20 or 21, wherein the charging transmission arrangement (210) uses at least two separate charge transmission connectors (210a, 210b, 210c; 210d, 210e, 210f), where the method comprises detecting at which charge transmission connectors (210a, 210b, 210c; 210d, 210e, 210f) a charge current of correct polarity is delivered at a certain moment.
23. The method according to any one of the examples 20-22, wherein the charging reception arrangement (156) uses at least two separate charge reception connectors (156a, 156b, 156c; 156d, 156e, 156f), where the method comprises detecting at which charge reception connectors (156a, 156b, 156c; 156d, 156e, 156f) a charge current of correct polarity is received at a certain moment.
24. The method according to example 23, further comprising communicating how many charge reception connectors (156a, 156b, 156c; 156d, 156e, 156f) that receive a charge current of correct polarity at a certain moment to the robotic work tool interaction station (200).
25. The method according to any one of the examples 20-24, further comprising communicating an alert message intended for a user when charge connectors (156a, 156b, 156c; 156d, 156e, 156f; 210a, 210b, 210c; 210d, 210e, 210f) fail to deliver a charge current of correct polarity to a predetermined extent for a predetermined number of times.

## Claims

1. A robotic work tool interaction station (200) adapted to receive an oncoming outdoor robotic work tool (100), where the interaction station (200) comprises a station control unit (212), a station charging unit (213) and a charging transmission arrangement (210) that is adapted to provide a charge current, delivered from the station charging unit (213), to a charging reception arrangement (156) of an outdoor robotic work tool (100), wherein the charging transmission arrangement (210) comprises at least two separate first charge transmission connectors (210a, 210b, 210c) adapted for a first charge current polarity (+) and at least two separate second charge transmission connectors (210d, 210e, 210f) adapted for a second charge current polarity (-), each charge transmission connector (210a, 210b, 210c; 210d, 210e, 210f) being separately controllable.

2. The robotic work tool interaction station (200) according to claim 1, wherein the station charging unit (213) is adapted to detect at which charge transmission connectors (210a, 210b, 210c; 210d, 210e, 210f) a charge current of correct polarity is delivered at a certain moment.

3. The robotic work tool interaction station (200) according to claim 2, wherein the station control unit (212) is adapted to control the station charging unit (213) to set a certain charge voltage in dependency of how many charge transmission connectors (210a, 210b, 210c; 210d, 210e, 210f) that deliver a charge current of correct polarity at a certain moment.

4. A robotic work tool (100) comprising a main body part (140), a plurality of wheels (130, 131), a tool control unit (110) and at least one electric motor arrangement (150, 165), where at least one wheel (131) is drivably connected to at least one electric motor (150), the robotic work tool (100) further comprising a rechargeable electric power source (155) adapted to provide power to the electric motor arrangement (150, 165) and a charging reception arrangement (156) adapted to be electrically connected to a charging transmission arrangement (210) for charging the power source (155) via a tool charging unit (154), wherein the charging reception arrangement (156) comprises at least two separate first charge reception connectors (156a, 156b, 156c) adapted for a first charge current polarity (+) and at least two separate second charge reception connectors (156d, 156e, 156f) adapted for a second charge current polarity (-), each charge reception connector (156a, 156b, 156c; 156d, 156e, 156f) being separately controllable.

5. The robotic work tool (100) according to claim 4, wherein the tool charging unit (154) is adapted to detect at which charge reception connectors (156a, 156b, 156c; 156d, 156e, 156f) a charge current of correct polarity is received at a certain moment.

6. The robotic work tool (100) according to claim 5, wherein the tool control unit (110) is adapted to communicate how many charge reception connectors (156a, 156b, 156c; 156d, 156e, 156f) that receive a charge current of correct polarity at a certain moment to a robotic work tool interaction station (200).

7. The robotic work tool (100) according to any one of the claims 4-6, wherein the robotic work tool (100) is a robotic lawnmower (100).

8. The robotic work tool (100) according to claim 7, wherein the robotic lawnmower (100) comprises a grass cutting device in the form of a rotatable disc (160) that is driven by a cutter motor (165).

9. A robotic work tool system (300) comprising a robotic work tool (100) and a robotic work tool interaction station (200) adapted to receive an oncoming outdoor robotic work tool (100),
- where the robotic work tool (100) comprises a plurality of wheels (130, 131), a tool control unit (110) and at least one electric motor arrangement (150, 165), where at least one wheel (131) is drivably connected to at least one electric motor (150), the robotic work tool (100) further comprising a rechargeable electric power source (155) adapted to provide power to the electric motor arrangement (150, 165) and a charging reception arrangement (156) adapted to be electrically connected to a charging transmission arrangement (210) for charging the power source (155) via a tool charging unit (154),
- where the interaction station (200) comprises a station control unit (212), a station charging unit (213) and a charging transmission arrangement (210) that is adapted to provide a charge current, delivered from the station charging unit (213), to the charging reception arrangement (156),
- where at least one of the charging reception arrangement (156) and the charging transmission arrangement (210) comprises at least two separate charge connectors (156a, 156b, 156c; 210a, 210b, 210c) for a first charge current polarity (+) and at least two separate charge connectors (156d, 156e, 156f; 210d, 210e, 210f) for a second charge current polarity (-).

10. The robotic work tool system (300) according to claim 9, wherein the station charging unit (213) is adapted to receive information regarding at which charge connectors (156a, 156b, 156c; 156d, 156e, 156f; 210a, 210b, 210c; 210d, 210e, 210f) a charge current of correct polarity is transferred at a certain moment.

11. The robotic work tool system (300) according to any one of the claims 9 or 10, wherein the charging transmission arrangement (210) comprises at least two separate charge transmission connectors (210a, 210b, 210c; 210d, 210e, 210f) and is adapted to detect at which charge transmission connectors (210a, 210b, 210c; 210d, 210e, 210f) a charge current of correct polarity is delivered at a certain moment.

12. The robotic work tool system (300) according to any one of the claims 9 or 10, wherein the tool charging unit (154) comprises at least two separate charge reception connectors (156a, 156b, 156c; 156d, 156e, 156f) and is adapted to detect at which charge reception connectors (156a, 156b, 156c; 156d, 156e, 156f) a charge current of correct polarity is received at a certain moment.

13. The robotic work tool system (300) according to claim 12, wherein the tool control unit (110) is adapted to communicate how many charge reception connectors (156a, 156b, 156c; 156d, 156e, 156f) that receive a charge current of correct polarity at a certain moment to the station control unit (212).

14. A method at a robotic work tool interaction station (200) used for receiving an oncoming outdoor robotic work tool (100), the method comprising
providing (S100) a charge current, delivered from the station charging unit (213), to a charging reception arrangement (156) of an outdoor robotic work tool (100) using at least two separate first charge transmission connectors (210a, 210b, 210c) adapted for a first charge current polarity (+) and at least two separate second charge transmission connectors (210d, 210e, 210f) adapted for a second charge current polarity (-), each charge transmission connector (210a, 210b, 210c; 210d, 210e, 210f) being separately controllable.

15. The method according to claim 14, further comprising
detecting (S200) at which charge transmission connectors (210a, 210b, 210c; 210d, 210e, 210f) a charge current of correct polarity is delivered at a certain moment; and
setting (S300) a certain charge voltage in dependency of how many charge transmission connector (210a, 210b, 210c; 210d, 210e, 210f) that deliver a charge current of correct polarity at a certain moment.
